# EUROPEAN PATENT APPLICATION

(11) **EP 4 632 550 A1**
(43) Date of publication of application: **15.10.2025**
(21) Application number: 25167410.7
(22) Date of filing: 31.03.2025
(51) Int. Cl.: G06F 3/12

(54) **SHEET-PROCESSING SYSTEM, SET CHANGE METHOD OF THE SAME, AND SET CHANGE PROGRAM**

(30) Priority: 12.04.2024 JP 2024064824
(71) Applicant: Horizon Inc., Takashima-shi, Shiga 520-1501 (JP)
(72) Inventor: MOCHIZUKI, Jun, Takashima-shi, Shiga, 520-1501 (JP); KANAO, Masamichi, Takashima-shi, Shiga, 520-1501 (JP); FUJIWARA, Kosuke, Takashima-shi, Shiga, 520-1501 (JP)
(74) Representative: Lippert Stachow Patentanwälte Rechtsanwälte

(57) **Abstract**

Automation of a set change in switching between jobs is achieved. A sheet-processing system includes a receiving unit 21 configured to receive a job ID for identifying job information from a printing machine; a set information acquisition unit 22 configured to acquire set information that has been generated based on job information corresponding to the job ID and will be required for a setting change of the sheet-processing system; a change unit 23 configured to perform a set change of the sheet-processing system based on the set information; and a transmitting unit 24 configured to transmit, to the printing machine, an operation start request instruction for requesting start of operation of a job upon completion of the set change of the sheet-processing system.

## Description

### BACKGROUND

### 1. TECHNICAL FIELD

The present invention relates to a sheet-processing system, a set change method of the same, and a set change program.

### 2. DESCRIPTION OF RELATED ART

For example, Japanese Patent No. 6890838 discloses a saddle stitch bookbinding system including a sheet feeder configured to supply sheets one by one from a sheet stack, a folding machine configured to fold the sheets supplied from the sheet feeder to form a fold section, and a saddle stitcher configured to saddle-stitch the fold section.

In such a saddle stitch bookbinding system, a unit for counting books having different sizes or thicknesses is called a job, and when different jobs are executed, it is required to perform a set change of a machine on a job basis. The set change is to configure parameters of various devices of a system (for example, a guide, a transport unit, a stitcher, or the like) in accordance with a sheet size, a finished size, a thickness of a sheet or a sheet bundle, or the like.

Japanese Patent No. 6890838 is an example of the related art.

Set changes in switching between jobs described above are conventionally performed by an operator. Thus, an operator has to perform entry operation for set changes on a job basis and is required to have technical knowledge, so that a dedicated operator is necessary.

The present invention has been made in view of such circumstances and intends to provide a sheet-processing system, a set change method of the same, and a set change program that can achieve automation of a set change in switching between jobs.

### BRIEF SUMMARY

A sheet-processing system according to one aspect of the present invention is a sheet-processing system configured to perform sheet-processing on a sheet supplied from a pre-processing machine, and the sheet-processing system includes: a receiving unit configured to receive a job ID from the pre-processing machine, the job ID being for identifying job information in which a production step procedure for producing a print is registered; a set information acquisition unit configured to acquire set information, the set information being generated based on job information corresponding to the job ID and being required for a setting change of the sheet-processing system; a change unit configured to perform a set change of the sheet-processing system based on the set information; and a transmitting unit configured to transmit an operation start request instruction to the pre-processing machine upon completion of the set change of the sheet-processing system, the operation start request instruction being for requesting start of operation of a job identified by the job ID.

A set change method of a sheet-processing system according to one aspect of the present invention is a set change method of a sheet-processing system configured to perform sheet-processing on a sheet supplied from a pre-processing machine, and a computer performs steps of: receiving a job ID from the pre-processing machine, the job ID being for identifying job information in which a production step procedure for producing a print is registered; acquiring set information required for a setting change of the sheet-processing system based on job information corresponding to the job ID; performing a set change of the sheet-processing system based on the set information; and transmitting an operation start request instruction to the pre-processing machine upon completion of the setting change of the sheet-processing system, the operation start request instruction being for requesting start of operation of a job identified by the job ID.

In general, preferably, the set change method according to the present invention is carried out by using a sheet-processing system according to the present invention.

All features being disclosed with respect to the sheet-processing system also are disclosed with respect to the set change method of the present invention, and vice versa.

A set change program according to one aspect of the present invention causes a computer to perform the set change method of the sheet-processing system described above. Especially, the set change program according to one aspect of the present invention may cause the sheet-processing system according to the present invention to execute the steps of the set change method of the present invention.

According to the present invention, automation of a set change in switching between jobs can be achieved.

### BRIEF DESCRIPTION OF THE SEVERAL VIEWS OF THE DRAWINGS

Fig. 1 is a system schematic diagram illustrating a general configuration of a printing system according to one embodiment of the present invention.
Fig. 2 is a diagram illustrating an example of a hardware configuration of processing circuitry of a sheet-processing system according to one embodiment of the present invention.
Fig. 3 is a function configuration diagram illustrating an example of a set change unit of the sheet-processing system according to one embodiment of the present invention.
Fig. 4 is a flowchart illustrating an example of a procedure of a job management method of the printing system including a procedure of the set change method of the sheet-processing system according to one embodiment of the present invention.
Fig. 5 is a flowchart illustrating an example of a procedure of a job management method of the printing system including a procedure of the set change method of the sheet-processing system according to one embodiment of the present invention.
Fig. 6 is a system schematic diagram illustrating a general configuration of a printing system according to another embodiment of the present invention.

### DETAILED DESCRIPTION

A sheet-processing system, a set change method of the same, and a set change program according to one embodiment of the present invention will be described below with reference to the drawings.

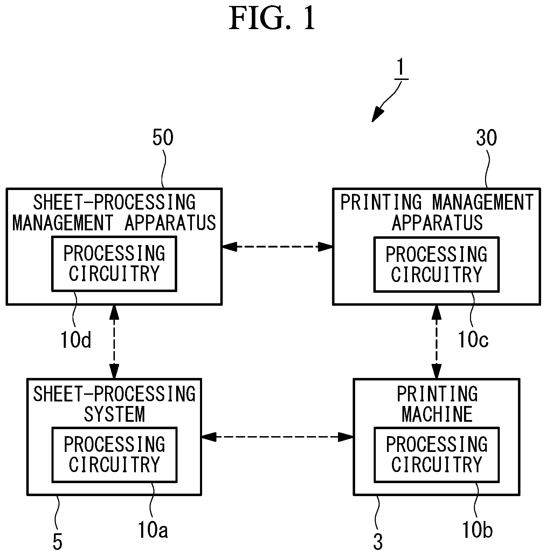

Fig. 1 is a system schematic diagram illustrating a general configuration of a printing system 1 according to the present embodiment. As illustrated in Fig. 1, the printing system 1 includes, for example, a printing machine (pre-processing machine) 3 and a sheet-processing system 5. Further, the printing system 1 may include, for example, a printing management apparatus 30, which is a higher-level apparatus of the printing machine 3, and a sheet-processing management apparatus 50, which is a higher-level apparatus of the sheet-processing system 5.

The printing machine 3 is a digital printing machine, for example, and perform printing based on job information or the like received from the printing management apparatus 30 and discharges printed sheets (for example, sheets of paper) to outside of the printing machine 3. The sheets discharged from the printing machine 3 are supplied to the sheet-processing system 5 via a transport path (not illustrated).

The sheet-processing system 5 is a system to perform sheet-processing on sheets supplied from the printing machine 3. An example of the sheet-processing system 5 may be a saddle stitch bookbinding system. The saddle stitch bookbinding system is a system including a folding machine configured to fold sheets printed by the printing machine 3 to form a fold section, a saddle stitcher configured to saddle-stitch the fold section, and the like, as illustrated as an example in Japanese Patent No. 6890838. Further, another example of the sheet-processing system 5 may be a bookbinding machine, a sheet folding machine, a cutting machine, a creasing machine, or the like. Further, the sheet-processing system 5 may be a system formed of a combination of these machines.

The sheet-processing system 5 can be any machine that performs some sheet-processing on sheets supplied from the pre-processing machine (in the present embodiment, the printing machine 3). Note that various known technologies have been proposed for the specific configuration or control method of the printing machine 3 and the sheet-processing system 5, and thus these known technologies can be employed as appropriate.

For simplified illustration, the following will be described with an example where the sheet-processing system 5 serves as a saddle stitch bookbinding system, and the printing machine 3 and the sheet-processing system 5 are connected inline to each other.

In a printing system 1, the printing machine 3 is configured to communicate with the printing management apparatus 30, and the sheet-processing system 5 is configured to communicate with the sheet-processing management apparatus 50. Further, the printing management apparatus 30 and the sheet-processing management apparatus 50 are configured to communicate with each other, and the printing machine 3 and the sheet-processing system 5 are configured to communicate with each other.

Next, job management in the printing system 1 will be described. In the present embodiment, a case where jobs (various steps) in the printing system 1 are managed by the printing management apparatus 30 will be described as an example.

For example, various steps in the printing system 1 are advanced according to a job management list managed by the printing management apparatus 30. Herein, the job management list is a list in which production schedules of prints produced by the printing system 1 are registered. In the job management list, for example, job information, job status, and the like in which production step procedures for producing a print are registered for each job ID (job identification information) allocated to the print. As discussed above, the job ID is used as information for identifying job information.

The job information is various information required for producing prints and includes, for example, sheet information and operation information.

The sheet information includes, for example, a sheet size, a sheet thickness, a sheet type, an area rate, the presence or absence of inversion, the number of prints, the number of sheets forming a print, the number of copies of prints to be created, and the like.

The operation information includes production step procedures for a print, IDs of print sheet-processing machines to be used in a production step, and setting parameters thereof.

For example, setting parameters such as a height of a shelf, a guide position, or the like are registered as the operation information in association with the printing machine ID of the printing machine 3. Further, a sheet-processing specification, offset information on a sheet feed position for each folding machine ID, or the like are registered in association with the sheet-processing machine ID of the sheet-processing system 5.

As the job information described above, for example, JDF described in a standard format in the technical field of printing can be used.

As the job status, "completed", "on-going", "incomplete", or the like are registered for each production step of prints (for example "printing", "sheet folding", "saddle stitch", or the like).

The printing management apparatus 30 performs new addition, update, deletion, or the like of the job management list.

For example, in response to accepting a production request of a new print, the printing management apparatus 30 updates the job management list by providing a job ID to the print accepted with the request and by registering the job information on the job ID in the job management list.

Further, in response to accepting a printing job completion signal from the printing machine 3, the printing management apparatus 30 updates the job status in the job management list based on the printing job completion signal. This makes it possible to distinguish between a completed job, an incomplete job, and an on-going job. Further, for the on-going job, it becomes possible to determine up to which step the job has been completed. This makes it possible to manage the job progress.

Further, upon receipt of a printing job start request or receipt a printing job completion signal from the printing machine 3, the printing management apparatus 30 identifies a next job to be executed based on the job management list and transmits job information (for example, JDF) on the identified job to the printing machine 3 and the sheet-processing management apparatus 50. Accordingly, each step in the printing system 1 is advanced stably and smoothly based on the job information.

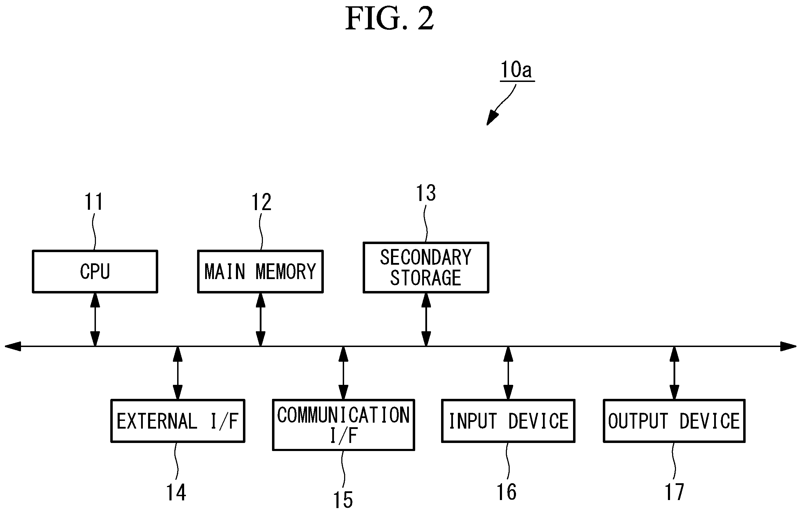

Next, a set change function of the sheet-processing system 5 executed in switching between jobs described above will be described. The set change in the sheet-processing system 5 is implemented by processing circuitry 10a of the sheet-processing system 5. Fig. 2 is a diagram illustrating an example of the hardware configuration of the processing circuitry 10a of the sheet-processing system 5. As illustrated in Fig. 2, the processing circuitry 10a is, for example, a computer and includes a central processing unit (CPU: processor) 11, a main memory 12, a secondary storage 13, an external interface 14, a communication interface 15, and the like. These components are connected to each other directly or indirectly via a bus and cooperate with each other to perform various processes.

Further, an input device 16, an output device 17, a speaker, a microphone, a camera, and the like may be connected to the processing circuitry 10a. An example of the input device may be a keyboard, a touch pad, a pointing device, or the like. An example of the pointing device may be a mouse, a touch panel, a pen tablet, a trackpad, a trackball, or the like. An example of the output device may be a display, a projector, a printer, or the like. Further, a touch panel including both the functions of the input device 16 and the output device 17 may be provided. Further, the input device 16 and the output device 17 may be connected to the processing circuitry 10a via a network or the like and configured to enable input operation from a remote location and remote display.

The CPU 11 implements various functions by executing various programs stored in the secondary storage 13 connected thereto via bus, for example. One or a plurality of CPUs 11 are provided, and a plurality of CPUs 11 may cooperate with each other to implement a process.

The main memory 12 is formed of a writable memory such as a cache memory, a random access memory (RAM), or the like, and is used as a working area where an execution program of the CPU 11 is loaded and writing of data processed by the execution program and the like are performed.

The secondary storage 13 is a non-transitory computer readable storage medium. The secondary storage 13 is, for example, a magnetic disk, a magneto-optical disk, a CD-ROM, a DVD-ROM, a semiconductor memory, or the like. An example of the secondary storage 13 may be a read only memory (ROM), a hard disk drive (HDD), a solid state drive (SSD), a flash memory, or the like.

The secondary storage 13 stores programs for implementing various processes and various data required for implementing various processes.

The secondary storage 13 may store OS used for controlling the sheet-processing system 5, such as embedded OS, Windows (registered trademark), iOS (registered trademark), or Android (registered trademark). Further, the secondary storage 13 may store Basic Input/Output System (BIOS), various device drivers for hardware operation of peripherals, various application software, various data and files, and the like. A plurality of secondary storages 13 may be provided, and the program or the data as described above may be divided and stored in respective secondary storages 13.

The external interface 14 is an interface for connecting itself to external devices. An example of the external devices may be an external monitor, a USB memory, an external HDD, an external camera, or the like. Note that, while only a single external interface is depicted in the example illustrated in Fig. 2, a plurality of external interfaces may be provided.

The communication interface 15 functions as an interface for connecting itself to a network to communicate with other devices and transmitting and receiving information. For example, the communication interface 15 performs wired or wireless communication with other devices. The wireless communication may be communication through lines, such as Bluetooth (registered trademark), Wi-Fi, a mobile communication system (3G, 4G, 5G, 6G, LTE, or the like), a wireless LAN, or the like. An example of the wired communication may be communication through lines, such as a wired local area network (LAN).

A series of processes for implementing various functions (such as set change function) described below are stored in the secondary storage 13 or the like in a form of a program as an example (such as the set change program), and the various functions are implemented when the CPU (processor) 11 loads this program into the main memory 12 and performs modification and calculation processing on information. Note that the program may employ a form of being installed in advance in the secondary storage 13, a form of being provided in a state of being stored in a non-transitory computer readable storage medium, a form of being delivered via a wired or wireless communication connection, or the like. An example of the non-transitory computer readable storage medium may be a magnetic disk, a magneto-optical disk, a CD-ROM, a DVD-ROM, a semiconductor memory, or the like.

Further, as illustrated in Fig. 1, the printing management apparatus 30, the printing machine 3, and the sheet-processing management apparatus 50 have processing circuitry 10b, 10c, and 10d having the similar configuration, and each function or process described below is implemented by the processing circuitry 10b to 10d. Further, in the sheet-processing system 5 and the printing machine 3, each processing circuitry 10a, 10b may function as a controller that controls each device or may cooperate with a control unit of each device to implement printing or sheet-processing.

Next, a set change unit (set change function) 20 of the sheet-processing system 5 according to the present embodiment will be described.

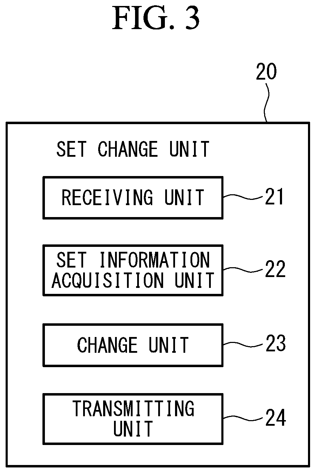

Fig. 3 is a function configuration diagram illustrating an example of the set change unit 20 of the sheet-processing system 5. As illustrated in Fig. 3, the set change unit 20 of the sheet-processing system 5 includes, for example, a receiving unit 21, a set information acquisition unit 22, a change unit 23, and a transmitting unit 24.

The receiving unit 21 receives a job ID from the printing machine 3.

The set information acquisition unit 22 acquires set information that has been generated based on job information corresponding to a job ID and will be required for a set change of the sheet-processing system 5.

For example, the set information acquisition unit 22 transmits a job ID received from the printing machine 3 to the sheet-processing management apparatus 50. In response to receiving a job ID, the sheet-processing management apparatus 50 generates set information required for a set change of the sheet-processing system 5 based on job information (for example, JDF) associated with this job ID and transmits the generated set information to the sheet-processing system 5. Accordingly, the set information acquisition unit 22 of the sheet-processing system 5 acquires the set information corresponding to the job ID.

For example, job information such as JDF is mixed with information required for a set change of the sheet-processing system 5 and information not required for the set change. The sheet-processing management apparatus 50 extracts information required for a set change of the sheet-processing system 5 out of various information included in job information and generates set information. Further, if no information required for a set change of the sheet-processing system 5 is included in job information, the sheet-processing management apparatus 50 performs predetermined calculation by using various information of the job information and generates information required for the set change (for example, various parameters associated with the finishing quality or the productivity of books).

The information constituting set information of the sheet-processing system 5 includes at least one of a sheet size, a folding position, a finished size, a speed of the transport unit that transports sheets, the number of aligning times for increasing the finishing quality of a book, or information on detecting devices (such as various sensors) for detecting a defect of a sheet.

For example, in a case of a saddle stitcher, the set information includes at least one of a feed speed of a sheet bundle transport claw, a waiting time for feeding of a sheet bundle, a push-up time for a sheet bundle, a stitch position, the number of aligning times for increasing the finishing quality of a book, whether or not stitch detection is necessary, or whether or not a folding defect is detected.

For example, the processing circuitry 10d (see Fig. 1) of the sheet-processing management apparatus 50 has a program for generating information required for a set change of the sheet-processing system 5 from various detailed information included in job information. The processing circuitry 10d of the sheet-processing management apparatus 50 executes this program and thereby generates set information required for a setting change of the sheet-processing system 5.

The change unit 23 performs a setting change of the sheet-processing system 5 based on set information acquired from the sheet-processing management apparatus 50. For example, when the sheet-processing system 5 is a saddle stitch bookbinding system, the change unit 23 changes at least one parameter of a guide position suitable for a sheet size, a transport speed of the transport unit, a length of a wire to be supplied, or an interval for driving stitchers.

Upon completion of a setting change of the sheet-processing system 5, the transmitting unit 24 transmits, to the printing machine 3, an operation start request instruction for requesting a job operation start. For example, upon receipt of the job ID from the printing machine 3, the transmitting unit 24 transmits, to the printing machine 3, a standby request instruction for requesting standby for a job identified by a job ID. Further, upon completion of a setting change of the sheet-processing system 5, the transmitting unit 24 transmits, to the printing machine 3, a standby release request instruction for releasing standby for a job, as the operation start request instruction.

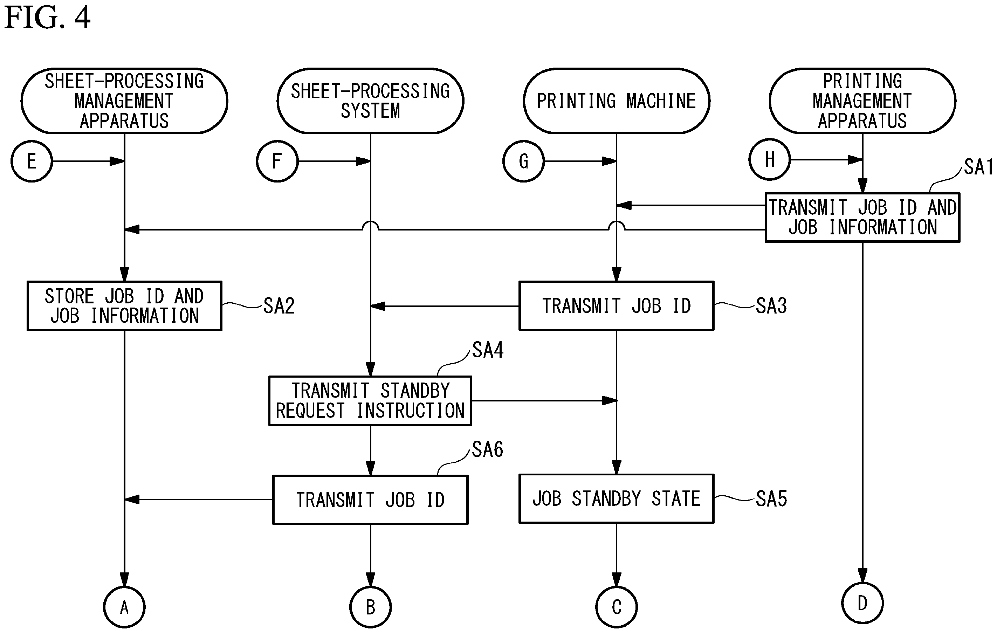

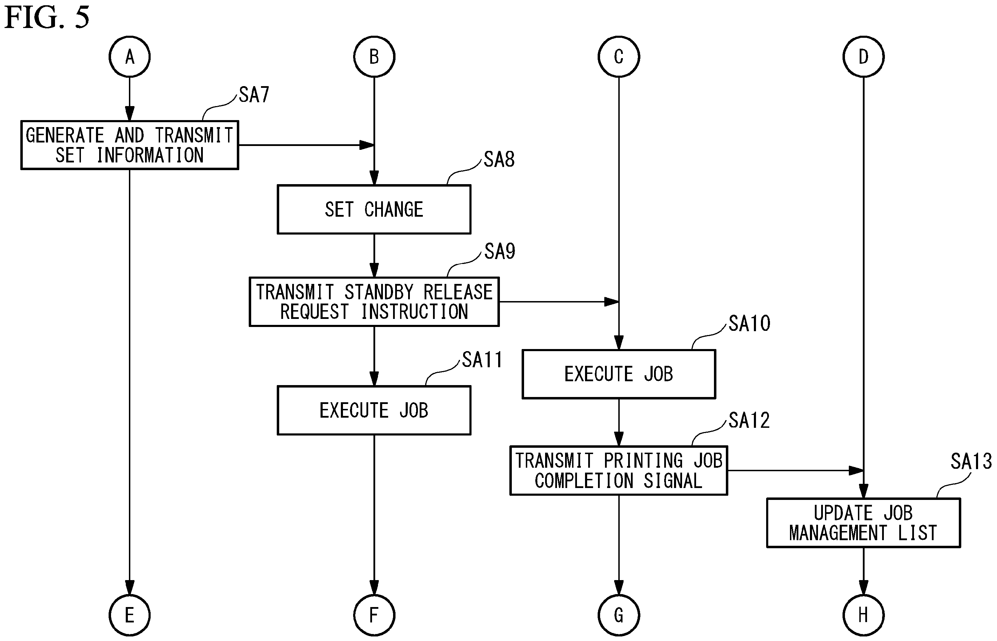

Next, a set change method of the sheet-processing system 5 will be described with reference to the drawings. Fig. 4 and Fig. 5 are flowcharts illustrating an example of a procedure of a job management method of a printing system including a procedure of a set change method of the sheet-processing system 5 according to the present embodiment.

First, once receiving a printing start request or a printing completion report from the printing machine 3, the printing management apparatus 30 identifies a next job to be executed based on a job management list and transmits a job ID and job information on the identified job to the printing machine 3 and the sheet-processing management apparatus 50 (in step SA1). The sheet-processing management apparatus 50 stores the received job ID and job information (in step SA2). On the other hand, in response to receiving the job ID and the job information, the printing machine 3 transmits the job ID to the sheet-processing system 5 (in step SA3).

In response to receiving the job ID, the sheet-processing system 5 transmits a standby request instruction to the printing machine 3 (in step SA4). Accordingly, the printing machine 3 enters a job standby state (in step SA5). For example, the printing machine 3 performs its own set change during a standby period. Thus, the setting parameters of various devices of the printing machine 3 are changed to parameters suitable for a next job to be executed.

Further, the sheet-processing system 5 transmits the received job ID to the sheet-processing management apparatus 50 (in step SA6). The sheet-processing management apparatus 50 generates set information required for performing a set change of the sheet-processing system 5 based on the job information identified by the received job ID and transmits the generated set information to the sheet-processing system 5 (in step SA7 of Fig. 5).

In response to receiving the set information, the sheet-processing system 5 performs a set change based on the set information (in step SA8). Accordingly, the parameters of various devices of the sheet-processing system 5 are changed. Upon completion of the set change, the sheet-processing system 5 transmits a standby release request instruction to the printing machine 3 (in step SA9).

In response to receiving the standby release request instruction, the printing machine 3 executes the job (in step SA10). Accordingly, a printing step based on the job information is performed. Further, sheets printed in the printing machine 3 are supplied to the sheet-processing system 5, and a sheet-processing step based on the job information is performed in the sheet-processing system 5 (in step SA11).

The printing machine 3 counts the print sheets in the printing step. Then, when the count number has reached the number of prints included in the job information, the printing machine 3 transmits a printing job completion signal and the job ID to the printing management apparatus 30 (in step SA12).

In response to receiving the job ID and the printing job completion signal, the printing management apparatus 30 updates the job management list based on these pieces of received information (in step SA13). Specifically, the job management list is updated by changing the status of the printing step for the job ID of the job management list to "completed". The process then returns to step SA1, a next job to be executed is determined from the job management list, and a job ID and job information on the determined job are transmitted to the printing machine 3 and the sheet-processing management apparatus 50. The subsequent processes are then repeatedly performed, so that printing and sheet-processing based on the job management list are performed, and in switching between jobs, a set change based on information on a next job to be executed is automatically performed.

Note that the process procedure described above is an example, an unnecessary step may be deleted, a new step may be added, or the processing order may be exchanged.

For example, in the process procedure described above, the sheet-processing system 5 transmits a standby request instruction to the printing machine 3 when the sheet-processing system 5 has received a job ID in step SA4 of Fig. 4; however, this process may be omitted. In such a case, the printing machine 3 determines by itself that there is switching between jobs and enters a job standby state.

Further, in the process procedure described above, the sheet-processing management apparatus 50 generates set information corresponding to the received job ID when having received a job ID (see SA7 of Fig. 5); however, the timing the sheet-processing management apparatus 50 generates set information is not limited thereto. For example, the sheet-processing management apparatus 50 may generate set information when having received a job ID and job information from the printing management apparatus 30 in step SA2 of Fig. 4. Further, the sheet-processing management apparatus 50 may generate set information at a predetermined timing after having received a job ID and job information from the printing management apparatus 30. By preparing set information in such a way, it is possible to provide set information to the sheet-processing system 5 immediately after receiving a job ID from the sheet-processing system 5.

As described above, according to the present embodiment, the sheet-processing system 5 includes the receiving unit 21 configured to receive a job ID from the printing machine (pre-processing machine) 3, the set information acquisition unit 22 configured to acquire set information that has been generated based on job information corresponding to the job ID and will be required for a set change of the sheet-processing system 5, the change unit 23 configured to perform a set change of the sheet-processing system 5 based on the set information, and the transmitting unit 24 configured to transmit, to the printing machine 3, an operation start request instruction (for example, a standby release request instruction) for requesting start of operation of a job upon completion of the set change of the sheet-processing system 5.

Accordingly, a set change based on set information on a next job to be executed can be automatically performed in switching between jobs. As a result, entry operation performed by the operator can be reduced, and automation can be achieved.

Further, according to the present embodiment, no job information is transmitted or received between the printing machine 3 and the sheet-processing system 5. This can reduce the data traffic between the printing machine 3 and the sheet-processing system 5 and thus can realize a smooth set change.

Further, according to the present embodiment, when the sheet-processing system 5 have received a job ID, the sheet-processing system 5 transmits a standby request instruction to the printing machine 3. This makes it possible to cause the printing machine 3 to stand by for job execution until the set change of the sheet-processing system 5 is completed. Thus, the start timing of job execution by the printing machine 3 can be controlled in accordance with the state of the sheet-processing system 5. Accordingly, for example, smooth job execution can be realized in inline systems in which the printing machine 3 and the sheet-processing system 5 are connected to each other, in particular, such systems that perform continuous sheet-processing from printing without temporarily buffering sheets in an accumulation apparatus.

As described above, according to the present embodiment, data communicated between the printing machine 3 and the sheet-processing system 5 is reduced, and furthermore, the timing of job execution in the printing machine 3 is controlled by an instruction from the sheet-processing system 5. Accordingly, an efficient workflow can be realized, in particular, in inline printing systems.

Although the present invention has been described above with reference to the embodiment, the technical scope of the present invention is not limited to the scope described in the above embodiment. Various change or improvement can be added to the above embodiment within the scope not departing from the spirit of the invention, and a form to which such change or improvement is applied is also included in the technical scope of the present invention.

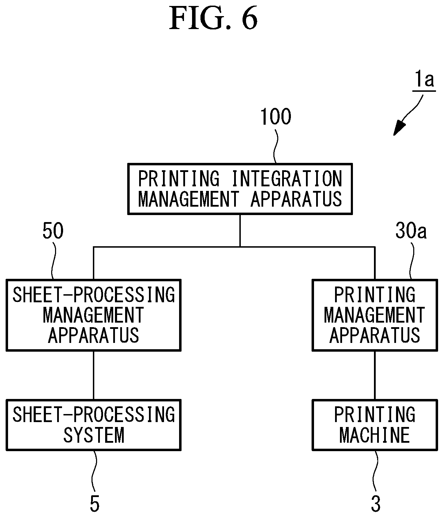

For example, in the embodiment described above, the printing management apparatus 30 manages various steps performed in the printing system 1 based on a job management list; however, the invention is not limited thereto. For example, as with a printing system 1a illustrated in Fig. 6, a printing integration management apparatus 100, which is a higher-level apparatus of a printing management apparatus 30a and the sheet-processing management apparatus 50, may be provided, and the printing integration management apparatus 100 may perform various step management of the printing system 1 based on a job management list. In such a case, the steps of update of a job management list and transmission of a job ID and job information described above will be performed by the printing integration management apparatus 100. In such a case, the printing management apparatus 30a mediates information between the printing integration management apparatus 100 and the printing machine 3. For example, the printing management apparatus 30a transmits a job ID and job information received from the printing integration management apparatus 100 to the printing machine 3 and, when having received a printing job completion signal from the printing machine 3, transmits this information to the printing integration management apparatus 100.

In the above embodiment, the inline system in which the sheet-processing system 5 and the printing machine 3 are connected to each other has been described as an example; however, the invention is not limited to this example. For example, an accumulation apparatus configured to stack thereon sheets discharged from the printing machine 3 may be provided in the transport path along which sheets are transported from the printing machine 3 to the sheet-processing system 5. In such a case, sheets discharged from the printing machine 3 will be once buffered in the accumulation apparatus and then transported from the accumulation apparatus to the sheet-processing system 5 at a predetermined timing.

Further, the system may be configured such that the printing machine 3 and the sheet-processing system 5 are installed at different locations, sheets discharged from the printing machine 3 are once accumulated on a stacker, and this stacker is moved to a sheet feed unit of the sheet-processing system by a human or an unmanned transport vehicle.

Further, in the above embodiment, the description has been provided with an example in which the printing machine 3 is a pre-processing machine; however, the invention is not limited thereto. For example, the pre-processing machine may be a roll sheet cutter configured to cut out a printed roll sheet or may be a sheet feed apparatus configured to supply a printed cut sheet.

Further, in the above embodiment, the case where the sheet-processing management apparatus 50 generates set information has been described; however, the invention is not limited thereto. For example, the processing circuitry 10a of the sheet-processing system 5 has a function of generating set information from job information, and set information may be generated in the sheet-processing system 5. Further, set information corresponding to a job ID may be stored in advance in a storage device of the processing circuitry 10a of the sheet-processing system 5, and in switching between jobs, the set information corresponding to the job ID may be read from the storage device to perform a set change.

Further, in the above embodiment, a job ID and job information about a next job is transmitted from the printing management apparatus 30 upon completion of a printing job; however, the invention is not limited thereto. For example, a plurality of job IDs and pieces of job information registered in the job management list may be transmitted to the printing machine 3 and the sheet-processing management apparatus in advance. In such a case, the printing management apparatus 30 will transmit a job ID of a next job to be executed to the printing machine 3 and the sheet-processing management apparatus 50 upon receipt of a printing job completion signal from the printing machine 3. This can reduce the data traffic in switching between jobs.

### [List of Reference Symbols]

- 1: printing system
- 3: printing machine
- 5: sheet-processing system
- 10a: processing circuitry
- 10b: processing circuitry
- 10c: processing circuitry
- 10d: processing circuitry
- 11: CPU
- 12: main memory
- 13: secondary storage
- 14: external interface
- 15: communication interface
- 16: input device
- 17: output device
- 20: set change unit
- 21: receiving unit
- 22: set information acquisition unit
- 23: change unit
- 24: transmitting unit
- 30: printing management apparatus
- 30a: printing management apparatus
- 50: sheet-processing management apparatus
- 100: printing integration management apparatus

## Claims

1. A sheet-processing system (5) configured to perform sheet-processing on a sheet supplied from a pre-processing machine, the sheet-processing system comprising:
a receiving unit (21) configured to receive a job ID from the pre-processing machine, the job ID being for identifying job information in which a production step procedure for producing a print is registered;
a set information acquisition unit (22) configured to acquire set information, the set information being generated based on job information corresponding to the job ID and being required for a setting change of the sheet-processing system;
a change unit (23) configured to perform a set change of the sheet-processing system based on the set information; and
a transmitting unit (24) configured to transmit an operation start request instruction to the pre-processing machine upon completion of the set change of the sheet-processing system, the operation start request instruction being for requesting start of operation of a job identified by the job ID.

2. The sheet-processing system (5) according to claim 1, wherein
the transmitting unit (24) transmits a standby request instruction to the pre-processing machine upon reception of the job ID from the pre-processing machine, the standby request instruction being for requesting standby for a job identified by the job ID, and
the transmitting unit (24) transmits a standby release request instruction as the operation start request instruction to the pre-processing machine when the setting change of the sheet-processing system is completed, the standby release request instruction being for releasing the standby for the job.

3. The sheet-processing system (5) according to claim 1 or 2, wherein the set information acquisition unit (22) acquires the set information by transmitting the job ID to a sheet-processing management apparatus (50) configured to generate the set information from the job information and by receiving the set information from the sheet-processing management apparatus (50).

4. The sheet-processing system (5) according to any one of claims 1 to 3 further comprising a storage unit configured to store a job ID and set information in association with each other,
wherein the set information acquisition unit (22) acquires the set information associated with the job ID from the storage unit.

5. The sheet-processing system (5) according to any one of claims 1 to 4 further comprising a storage unit configured to store a job ID and set information in association with each other,
wherein the set information acquisition unit (22) acquires the job information associated with the job ID from the storage unit and generates the set information from the acquired job information.

6. A set change method of a sheet-processing system (5) configured to perform sheet-processing on a sheet supplied from a pre-processing machine, the set change method comprising:
receiving a job ID from the pre-processing machine, the job ID being for identifying job information in which a production step procedure for producing a print is registered;
acquiring set information required for a setting change of the sheet-processing system based on job information corresponding to the job ID;
performing a set change of the sheet-processing system based on the set information; and
transmitting an operation start request instruction to the pre-processing machine upon completion of the setting change of the sheet-processing system, the operation start request instruction being for requesting start of operation of a job identified by the job ID.

7. The set change method of the sheet-processing system according to claim 6 further comprising:
transmitting a standby request instruction to the pre-processing machine upon reception of the job ID from the pre-processing machine, the standby request instruction being for causing the pre-processing machine to stand by for start of a job identified by the job ID, and
transmitting a standby release request instruction as the operation start request instruction to the pre-processing machine upon completion of the setting change of the sheet-processing system, the standby release request instruction being for releasing the standby for start of the job.

8. The set change method of the sheet-processing system according to claim 6 or 7, wherein the sheet-processing system is a system having at least one of a saddle stitch bookbinding system, a bookbinding machine, a sheet folding machine, a cutting machine, or a creasing machine.

9. A set change program configured to cause a computer to perform the set change method of the sheet-processing system according to any one of claims 6 to 8.

10. A non-transitory computer readable storage medium storing a set change program that causes a computer comprised in said sheet-processing system (5) according to any one of claims 1 to 5 to execute said set change method according to any one of claims 6 to 8.
